# EUROPEAN PATENT APPLICATION

(11) **EP 4 852 606 A1**
(43) Date of publication of application: **09.12.2026**
(21) Application number: 25767130.5
(22) Date of filing: 07.02.2025
(51) Int. Cl.: H04W 76/28

(54) **COMMUNICATION METHOD, APPARATUS AND SYSTEM**

(30) Priority: 05.03.2024 CN 202410255355
(71) Applicant: HUAWEI TECHNOLOGIES CO., LTD., Shenzhen, Guangdong 518129 (CN)
(72) Inventor: WANG, Fanfan, Shenzhen, Guangdong 518129 (CN); HU, Xingxing, Shenzhen, Guangdong 518129 (CN); ZHENG, Lili, Shenzhen, Guangdong 518129 (CN)
(74) Representative: MERH-IP Matias Erny Reichl Hoffmann Patentanwälte PartG mbB
(86) International application number: PCT/CN2025/076280
(87) International publication number: WO 2025/185386

(57) **Abstract**

This application provides a communication method, apparatus, and system, applicable to NTN communication scenarios. The method includes: sending first indication information to a first terminal device, where the first indication information indicates a first parameter, the first parameter is used for configuring a first mode, and the first mode is a cell discontinuous reception DRX mode and/or a cell discontinuous transmission DTX mode; and the first parameter is a parameter at a beam granularity, the first parameter corresponds to a first beam, and the first beam belongs to at least one beam used for communication in a serving cell; or the first parameter is a parameter at an area granularity, the first parameter corresponds to a first area, and the first area is one of a plurality of geographical areas covered by a serving cell of the first terminal device. According to the method, the application scope and use mode of the DTX/DRX mechanism are flexibly controlled. For example, different DTX modes (such as an active duration and a periodicity) may be configured for different geographical areas, allowing a network device to enter a shutdown state (inactive state) and stay in that state for a period of time. This locally achieves energy-saving effects in the cell, enables dynamic power allocation in the cell, and improves downlink coverage and cell capacity.

## Description

This application claims priority to Chinese Patent Application No. 202410255355.9, filed with the China National Intellectual Property Administration on March 5, 2024 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

Conventional terrestrial network (terrestrial network, TN) cannot provide seamless coverage for a user equipment (user equipment, UE), especially in places where base stations cannot be deployed, such as seas, deserts, and airspace. To address this, non-terrestrial network (non-terrestrial network, NTN) has been introduced into the internet of things (Internet of Things, IoT), 5th generation mobile communication technology (5th generation mobile communication technology, 5G) systems, and subsequent evolved system architectures, for example, future mobile communication technologies. Non-terrestrial networks provide seamless coverage for UEs by deploying base stations or some functions of the base stations on high-altitude platforms, satellites, or other non-terrestrial network devices, thereby improving system reliability.

However, NTN cells cover large geographical areas, and UEs are not evenly distributed across different geographical areas, with diverse service requirements. Therefore, the base station side cannot enter an inactive duration, or the inactive duration is very short, where the inactive duration refers to a period in which data transmission/reception between a cell (a network device) and the UE is suspended, making it difficult to save power of the base station and achieve energy-saving effects of the base station.

### SUMMARY

This application provides a communication method, apparatus, and system, enabling a network device to save energy.

According to a first aspect, a communication method is provided. The method may be performed by a network device, or may be performed by a module used in the network device, for example, a chip, a circuit, or a chip system. This is not limited in this application. For ease of description, an example in which the method is performed by the network device is used below for description.

The method includes: sending first indication information to a first terminal device, where the first indication information indicates a first parameter, the first parameter is used for configuring a first mode, and the first mode is a cell discontinuous reception DRX mode and/or a cell discontinuous transmission DTX mode; and the first parameter is a parameter at a beam granularity, the first parameter corresponds to a first beam, and the first beam belongs to at least one beam used for communication in a serving cell; or the first parameter is a parameter at an area granularity, the first parameter corresponds to a first area, and the first area is one of a plurality of geographical areas covered by a serving cell of the first terminal device.

The method is applicable to NTN communication scenarios. According to the method, an application range and a use mode of a DTX/DRX mechanism are flexibly controlled. For example, different DTX/DRX modes (used for describing parameters of an active period and an inactive period, for example, whether DTX or DRX is configured, start offset time, slot offset time, and an active state duration) may be configured for different geographical areas, allowing the network device to enter a shutdown state and stay in that state for a period of time. This achieves network energy saving effects and enables dynamic power allocation of a network.

In some implementations, the first indication information further indicates an initial state of the first mode, and the initial state of the first mode is an activated state or a deactivated state.

In some implementations, the first indication information further indicates a second parameter, and the second parameter corresponds to a second beam, or the second parameter corresponds to a second area.

In other words, the first indication information may indicate a parameter for a first mode corresponding to a beam or an area, or the first indication information may indicate parameters for first modes respectively corresponding to a plurality of beams or a plurality of areas, so that signaling overheads can be further reduced.

In some implementations, second indication information is sent to the first terminal device by using layer-1 group common signaling, where the second indication information indicates a state of the first mode of the at least one beam or a state of the first mode of at least one area, the state of the first mode is an activated state or a deactivated state, the at least one beam includes the first beam, and the at least one area includes the first area.

In this manner, the state of the first mode is indicated to the first terminal device by using the layer-1 group common signaling, that is, the state of the first mode is flexibly adjusted. In a communication process after the first mode is configured, a state of the first mode can be flexibly and dynamically adjusted at any time based on a communication requirement, so that when a service requirement is satisfied, power consumption of the network device and/or a terminal device can be further reduced, and power of the network device can be flexibly allocated.

In some implementations, the second indication information includes at least one downlink control information DCI information block, and the at least one DCI information block indicates the state of the first mode of the at least one beam or the state of the first mode of the at least one area.

In some implementations, the method further includes: sending third indication information to the first terminal device, where the third indication information indicates a position of a start bit of a DCI information block corresponding to the first beam or the first area.

Optionally, the third indication information may further indicate positions of start bits of DCI information blocks corresponding to one or more beams/areas. The position of the start bit of the DCI information block may indicate the state of the first mode.

In some implementations, the method further includes: sending fourth indication information to the first terminal device, where the fourth indication information indicates to release, add, or modify a parameter for the first mode corresponding to the at least one area or the at least one beam.

In this manner, when the first mode needs to be released, modified, or added, the first mode is dynamically indicated in a timely manner by using signaling, so that a service requirement can be satisfied.

In some implementations, the method further includes: receiving fifth indication information, where the fifth indication information indicates information about the first beam and/or position information of the first terminal device.

The first terminal device reports beam information and/or position information to the network device, so that the network device determines a parameter for a corresponding first mode, thereby avoiding an incorrect configuration.

In some implementations, the method further includes: indicating, by using a third parameter, a parameter for the first mode corresponding to the first area in which the first terminal device is located, or a parameter for the first mode corresponding to a first serving beam of the first terminal device, where the third parameter is a parameter at a serving cell granularity.

In some implementations, the first terminal device does not support a parameter at the beam granularity for the first mode and/or a parameter at the area granularity for the first mode.

To be specific, when the first terminal device does not support the parameter at the beam granularity or the area granularity for the first mode, but supports the parameter at the serving cell granularity, the parameter at the beam granularity or the area granularity for the first mode may be indicated to the first terminal device by using the parameter at the serving cell granularity.

In other words, when the first terminal device does not have a capability of the parameter at the beam granularity or the area granularity for the first mode, the parameter at the beam granularity or the area granularity that needs to be configured for the first terminal device may be carried by using a signaling (information element) format corresponding to a capability supported by the first terminal device, so that the first terminal device can correctly obtain the parameter, and align an active period and an inactive period with the network device. When capabilities of the first terminal device and the network device are different, an effect of dynamically allocating power by the network device can also be achieved.

Alternatively, a parameter for a cell DTX/DRX mode corresponding to a geographical area in which the first terminal device is located or a serving beam of the first terminal device is configured for the first terminal device as a parameter for a DRX/DTX mode per serving cell. Similarly, an activated state of cell DTX/DRX corresponding to the geographical area in which the first terminal device is located or the serving beam of the first terminal device may also be indicated by a per-serving-cell-level parameter.

In some implementations, a fourth parameter is used to indicate a parameter for the first mode corresponding to a second area in which the first terminal device is located, or a parameter for the first mode corresponding to a second serving beam of the first terminal device, where the fourth parameter is a parameter at the serving cell granularity, and the fourth parameter is different from the third parameter.

To be specific, because the first terminal device is located in different areas or uses different serving beams, although signaling (information element) formats, used by the network device, corresponding to capabilities that are supported by the first terminal device are the same, parameter values included in signaling (information elements) are different.

According to a second aspect, a communication method is provided. The method may be performed by a first terminal device, or may be performed by a module used in the first terminal device, for example, a chip, a circuit, or a chip system. This is not limited in this application. For ease of description, an example in which the method is performed by the first terminal device is used below for description.

The method includes: receiving first indication information, where the first indication information indicates a first parameter, the first parameter is used for configuring a first mode, and the first mode is a cell discontinuous reception mode and/or a cell discontinuous transmission mode; and the first parameter is a parameter at a beam granularity, the first parameter corresponds to a first beam, and the first beam belongs to at least one beam used for communication in a serving cell; or the first parameter is a parameter at an area granularity, the first parameter corresponds to a first area, and the first area is one of a plurality of geographical areas covered by a serving cell of the first terminal device; and determining the first parameter based on the first indication information.

In some implementations, the first indication information further indicates an initial state of the first mode, and the initial state of the first mode is an activated state or a deactivated state.

In some implementations, the first indication information further indicates a second parameter, and the second parameter corresponds to a second beam, or the second parameter corresponds to a second area.

In some implementations, the method further includes: receiving second indication information by using layer-1 group common signaling, where the second indication information indicates a state of the first mode of the at least one beam or a state of the first mode of at least one area, the state of the first mode is an activated state or a deactivated state, the at least one beam includes the first beam, and the at least one area includes the first area.

In some implementations, the second indication information includes at least one downlink control information DCI information block, and the at least one DCI information block indicates the state of the first mode of the at least one beam or the state of the first mode of the at least one area.

In some implementations, the method further includes: receiving third indication information, where the third indication information indicates a position of a start bit of a DCI information block corresponding to the first beam or the first area; and determining, based on the third indication information, a state of a first mode corresponding to the first beam or the first area.

In some implementations, the method further includes: receiving fourth indication information, where the fourth indication information indicates to release, add, or modify a parameter for the first mode corresponding to the at least one area or the at least one beam.

In some implementations, the method further includes: sending fifth indication information, where the fifth indication information indicates information about the first beam and/or position information of the first terminal device.

In some implementations, the method further includes: determining, by using a third parameter, a parameter for the first mode corresponding to the first area in which the first terminal device is located, or a parameter for the first mode corresponding to a first serving beam of the first terminal device, where the third parameter is a parameter at a serving cell granularity.

In some implementations, the first terminal device does not support a parameter at the beam granularity for the first mode and/or a parameter at the area granularity for the first mode.

In some implementations, a fourth parameter is used to determine a parameter for the first mode corresponding to a second area in which the first terminal device is located, or a parameter for the first mode corresponding to a second serving beam of the first terminal device, where the fourth parameter is a parameter at the serving cell granularity, and the fourth parameter is different from the third parameter.

It should be understood that the second aspect is an implementation on a network device side corresponding to the first aspect. Explanations, supplements, and descriptions of beneficial effects of the first aspect are also applicable to the second aspect. Details are not described again.

According to a third aspect, a communication apparatus is provided. The communication apparatus includes a transceiver unit and a processing unit. The transceiver unit is configured to send first indication information to a first terminal device, where the first indication information indicates a first parameter, the first parameter is used for configuring a first mode, and the first mode is a cell discontinuous reception DRX mode and/or a cell discontinuous transmission DTX mode; and the first parameter is a parameter at a beam granularity, the first parameter corresponds to a first beam, and the first beam belongs to at least one beam used for communication in a serving cell; or the first parameter is a parameter at an area granularity, the first parameter corresponds to a first area, and the first area is one of a plurality of geographical areas covered by a serving cell of the first terminal device.

In some implementations, the first indication information further indicates an initial state of the first mode, and the initial state of the first mode is an activated state or a deactivated state.

In some implementations, the first indication information further indicates a second parameter, and the second parameter corresponds to a second beam, or the second parameter corresponds to a second area.

In some implementations, second indication information is sent to the first terminal device by using layer-1 group common signaling, where the second indication information indicates a state of the first mode of the at least one beam or a state of the first mode of at least one area, the state of the first mode is an activated state or a deactivated state, the at least one beam includes the first beam, and the at least one area includes the first area.

In some implementations, the second indication information includes at least one downlink control information DCI information block, and the at least one DCI information block indicates the state of the first mode of the at least one beam or the state of the first mode of the at least one area.

In some implementations, the transceiver unit is further configured to send third indication information to the first terminal device, where the third indication information indicates a position of a start bit of a DCI information block corresponding to the first beam or the first area.

In some implementations, the transceiver unit is further configured to send fourth indication information to the first terminal device, where the fourth indication information indicates to release, add, or modify a parameter for the first mode corresponding to the at least one area or the at least one beam.

In some implementations, the communication apparatus further includes the processing unit. The processing unit is configured to indicate, by using a third parameter, a parameter for the first mode corresponding to the first area in which the first terminal device is located, or a parameter for the first mode corresponding to a first serving beam of the first terminal device, where the third parameter is a parameter at a serving cell granularity.

In some implementations, the first terminal device does not support a parameter at the beam granularity for the first mode and/or a parameter at the area granularity for the first mode.

In some implementations, the processing unit is configured to indicate, by using a fourth parameter, a parameter for the first mode corresponding to a second area in which the first terminal device is located, or a parameter for the first mode corresponding to a second serving beam of the first terminal device, where the fourth parameter is a parameter at the serving cell granularity, and the fourth parameter is different from the third parameter.

According to a fourth aspect, a communication apparatus is provided. The communication apparatus includes a transceiver unit and a processing unit. The transceiver unit is configured to receive first indication information, where the first indication information indicates a first parameter, the first parameter is used for configuring a first mode, and the first mode is a cell discontinuous reception mode and/or a cell discontinuous transmission mode; and the first parameter is a parameter at a beam granularity, the first parameter corresponds to a first beam, and the first beam belongs to at least one beam used for communication in a serving cell; or the first parameter is a parameter at an area granularity, the first parameter corresponds to a first area, and the first area is one of a plurality of geographical areas covered by a serving cell of a first terminal device. The processing unit is configured to determine the first parameter based on the first indication information.

In some implementations, the first indication information further indicates an initial state of the first mode, and the initial state of the first mode is an activated state or a deactivated state.

In some implementations, the first indication information further indicates a second parameter, and the second parameter corresponds to a second beam, or the second parameter corresponds to a second area.

In some implementations, the transceiver unit is further configured to receive second indication information by using layer-1 group common signaling, where the second indication information indicates a state of the first mode of the at least one beam or a state of the first mode of at least one area, the state of the first mode is an active state or a deactivated state, the at least one beam includes the first beam, and the at least one area includes the first area.

In some implementations, the second indication information includes at least one downlink control information DCI information block, and the at least one DCI information block indicates the state of the first mode of the at least one beam or the state of the first mode of the at least one area.

In some implementations, the transceiver unit is further configured to receive third indication information, where the third indication information indicates a position of a start bit of a DCI information block corresponding to the first beam or the first area; and the processing unit is configured to determine, based on the third indication information, a state of a first mode corresponding to the first beam or the first area.

In some implementations, the transceiver unit is further configured to receive fourth indication information, where the fourth indication information indicates to release, add, or modify a parameter for the first mode corresponding to the at least one area or the at least one beam.

In some implementations, the transceiver unit is further configured to send fifth indication information, where the fifth indication information indicates information about the first beam and/or position information of the first terminal device.

In some implementations, the processing unit is further configured to determine, by using a third parameter, a parameter for the first mode corresponding to the first area in which the first terminal device is located, or a parameter for the first mode corresponding to a first serving beam of the first terminal device, where the third parameter is a parameter at a serving cell granularity.

In some implementations, the first terminal device does not support a parameter at the beam granularity for the first mode and/or a parameter at the area granularity for the first mode.

In some implementations, the processing unit is further configured to determine, by using a fourth parameter, a parameter for the first mode corresponding to a second area in which the first terminal device is located, or a parameter for the first mode corresponding to a second serving beam of the first terminal device, where the fourth parameter is a parameter at the serving cell granularity, and the fourth parameter is different from the third parameter.

It should be understood that the third aspect and the fourth aspect are implementations of apparatus sides corresponding to the first aspect and the second aspect. Explanations, supplements, and descriptions of beneficial effects of the first aspect and the second aspect are also applicable to the third aspect and the fourth aspect. Details are not described again.

According to a fifth aspect, this application provides a communication apparatus, including an interface circuit and a processor. The interface circuit is configured to implement functions of the transceiver unit in the third aspect. The processor is configured to implement functions of the processing unit in the third aspect.

According to a sixth aspect, this application provides a communication apparatus, including an interface circuit and a processor. The interface circuit is configured to implement functions of the transceiver unit in the fourth aspect. The processor is configured to implement functions of the processing unit in the fourth aspect.

According to a seventh aspect, this application provides a computer-readable medium. The computer-readable medium stores program code to be executed by a terminal device, and the program code includes instructions used to perform the method in the first aspect, any one of the possible manners of the first aspect, or all the possible manners of the first aspect.

According to an eighth aspect, an embodiment of this application provides a computer-readable medium. The computer-readable medium stores program code to be executed by a network device, and the program code includes instructions used to perform the method in the second aspect, the third aspect, any one of the possible manners of the second aspect, any one of the possible manners of the third aspect, all the possible manners of the second aspect, or all the possible manners of the third aspect.

According to a ninth aspect, a computer program product storing computer-readable instructions is provided. When the computer-readable instructions are run on a computer, the computer is caused to perform the method in the first aspect, any one of the possible manners of the first aspect, or all the possible manners of the first aspect.

According to a tenth aspect, a computer program product storing computer-readable instructions is provided. When the computer-readable instructions are run on a computer, the computer is caused to perform the method in the second aspect, any one of the possible manners of the second aspect, or all the possible manners of the second aspect.

According to an eleventh aspect, a communication system is provided. The communication system includes an apparatus that has functions of implementing the method in the first aspect, any one of the possible manners of the first aspect, or all the possible manners of the first aspect, the method in the second aspect, any one of the possible manners of the second aspect, or all the possible manners of the second aspect, and various possible designs.

According to a twelfth aspect, a processor is provided. The processor is configured to be coupled to a memory, and configured to perform the method in the first aspect, any one of the possible manners of the first aspect, or all the possible manners of the first aspect.

According to a thirteenth aspect, a processor is provided. The processor is configured to be coupled to a memory, and configured to perform the method in the second aspect, any one of the possible manners of the second aspect, or all the possible manners of the second aspect.

According to a fourteenth aspect, a chip system is provided. The chip system includes a processor, and may further include a memory. The processor is configured to execute a computer program or instructions stored in the memory, to cause the chip system to implement the method in either the first aspect or the second aspect, and any possible implementation of either aspect. The chip system may include a chip, or may include a chip and another discrete component.

### BRIEF DESCRIPTION OF DRAWINGS

FIG. 1 is a diagram of a communication system 1000 to which an embodiment of this application is applied;
FIG. 2 is a diagram of a DTX periodicity configuration;
FIG. 3 is a diagram of a communication method according to this application;
FIG. 4 is a block diagram of a communication apparatus;
FIG. 5 is a block diagram of another communication apparatus; and
FIG. 6 is a block diagram of another communication apparatus.

### DESCRIPTION OF EMBODIMENTS

The following describes technical solutions of embodiments in this application with reference to the accompanying drawings.

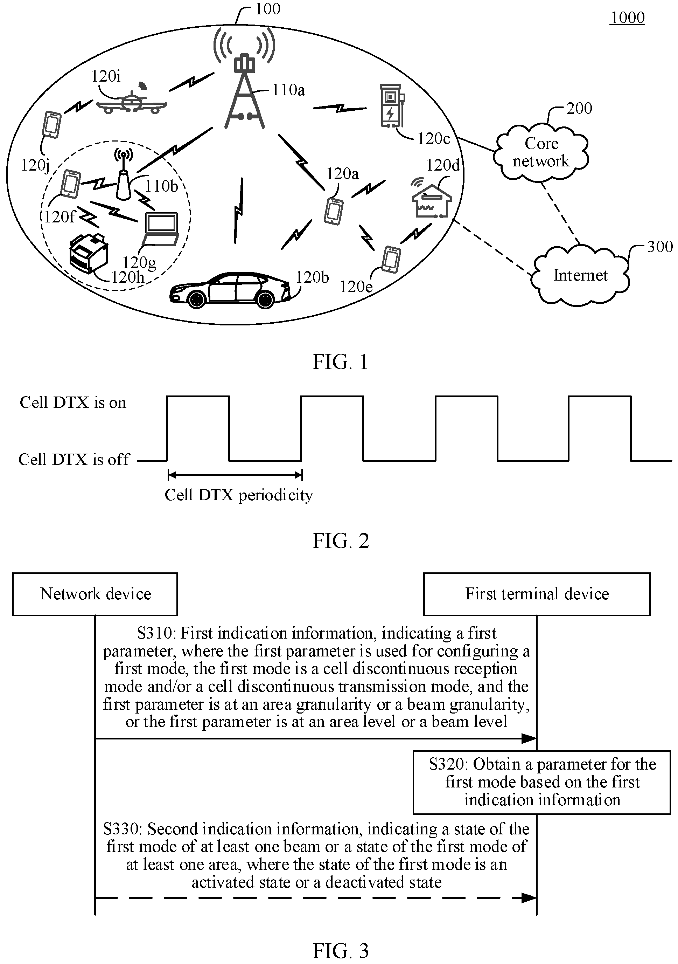

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is only a diagram. The communication system may further include other network devices, for example, may further include a wireless relay device and a wireless backhaul device, which are not shown in FIG. 1.

The core network device is a device in a core network (core network, CN) that provides service support for a terminal. Currently, some examples of the core network device are an access and mobility management function (access and mobility management function, AMF) entity, a session management function (session management function, SMF) entity, and a user plane function (user plane function, UPF) entity, which are not listed one by one herein. The AMF entity may be responsible for access management and mobility management of a terminal. The SMF entity may be responsible for session management, for example, user session establishment. The UPF entity may be a function entity on a user plane, and is mainly responsible for connecting to an external network. It should be noted that, the entity in this application may also be referred to as a network element or a function entity. For example, the AMF entity may also be referred to as an AMF network element or an AMF function entity. For another example, the SMF entity may also be referred to as an SMF network element, an SMF function entity, or the like.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a future mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all of functions of a physical layer. For specific descriptions of the foregoing protocol layers, refer to technical specifications related to the 3rd Generation Partnership Project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the base station is used as the radio access network device. A used communication manner is not limited in embodiments of this application, and may be any radio frequency communication technology, including but not limited to UWB, Wi-Fi, Bluetooth, cellular, and the like. A used device is not limited, and includes but is not limited to a base station, an AP, various terminals, or the like.

For example, a RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). For a CU node and a DU node, protocol layers of a gNB are split. Functions of some protocol layers are controlled by the CU in a centralized manner, functions of some or all remaining protocol layers are distributed in the DU, and the CU controls the DU in a centralized manner. In an implementation, a radio resource control (radio Resource Control, RRC) layer, a PDCP layer, and a service data adaptation protocol (service data adaptation protocol, SDAP) layer in a protocol stack are deployed in the CU. A radio link control (radio link control, RLC) layer, a medium access control (medium access control, MAC) layer, and a physical layer (physical layer, PHY) in a protocol stack are deployed in the DU. Therefore, the CU has RRC, PDCP, and SDAP processing capabilities. The DU has RLC, MAC, and PHY processing capabilities. It may be understood that the foregoing function division is merely an example, and constitutes no limitation on the CU and the DU. The RU may be included in a radio frequency device or a radio frequency unit, for example, included in a remote radio unit (remote radio unit, RRU), an active antenna unit (active antenna unit, AAU), or a remote radio head (remote radio head, RRH).

A terminal device may be a device that provides voice/data for a user, for example, a handheld device or a vehicle-mounted device having a wireless connection function. The terminal device may include a user equipment, and is sometimes referred to as a terminal, an access station, a UE station, a remote station, a wireless communication device, a user apparatus, or the like.

For example, the terminal device may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control, an entire vehicle, a wireless communication module in the entire vehicle, a telematics terminal box (telematics box, T-Box), a roadside unit (roadside unit, RSU), a wireless terminal in self-driving, a wireless terminal device in an internet of things (Internet of Things, IoT), a wireless terminal device in telemedicine, or a wireless terminal device in a smart grid, a wireless terminal device in transportation safety, a wireless terminal device in a smart city, a wireless terminal device in a smart home, or the like. This is not limited in this embodiment of this application.

By way of example and not limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also can implement powerful functions through software support, data exchange, and cloud interaction. In a broad sense, wearable intelligent devices include full-featured and large-sized devices that can implement all or some functions without depending on smartphones, for example, smartwatches or smart glasses, and include devices that are dedicated to only one type of application function and need to collaboratively work with other devices such as smartphones, for example, various smart bands or smart jewelry for monitoring physical signs.

The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range-extended electric vehicle (range-extended EV, REEV), a plug-in hybrid electric vehicle (plug-in HEV, PHEV), a new energy vehicle (new energy vehicle), or a roadside apparatus (roadside unit, RSU). The terminal device may alternatively be a device in device-to-device (device-to-device, D2D) communication, for example, an electricity meter or a water meter.

In addition, in embodiments of this application, the terminal device may alternatively be a terminal device in an IoT system. An IoT is an important part of future development of information technologies, and is mainly technically characterized in that things are connected to networks by using communication technologies, to implement intelligent networks of human-machine interconnection and thing-thing interconnection.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

The base station and the terminal may be at fixed positions or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b in FIG. 1 each may be referred to as a communication apparatus having a function of a base station, and 120a to 120j in FIG. 1 each may be referred to as a communication apparatus having a function of a terminal.

Communication between a base station and a terminal, between base stations, or between terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

It should be understood that this application is further applicable to an open RAN (open RAN, O-RAN) architecture. An O-RAN is intended to implement an intelligent and open access network. The O-RAN architecture mainly features separation of software and hardware, and implements network function virtualization and hardware standardization. In addition, artificial intelligence (artificial intelligence, AI) is introduced into the O-RAN. In an O-RAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. In different systems, the CU (or the CU-CP and the CU-UP), the DU, or the RU may also have different names, but a person skilled in the art may understand meanings thereof. Any one of the CU (or the CU-CP and the CU-UP), the DU, and the RU in this application may be implemented by using a software module, a hardware module, or a combination of a software module and a hardware module.

For a correspondence between an O-RAN access network device (network element module) and a protocol layer function that can be implemented by the O-RAN access network device, refer to the following table.

| Network element name | English full name | Description |
|---|---|---|
| O-CU | O-RAN central unit or O-RAN control unit (O-RAN central unit or O-RAN control unit) | Used to implement a radio resource control (radio resource control, RRC) layer, a packet data convergence protocol (packet data convergence protocol, PDCP) layer, a service data adaptation protocol (service data adaptation protocol, SDAP) layer, and other control functions in a 3GPP standard. |
| O-CU-CP | O-RAN central unit control plane or O-RAN control unit control plane (O-RAN central unit control plane or O-RAN control unit control plane) | Similar to a CU-CP in an NR system, and used to implement a function of the RRC layer and a control plane function of the PDCP layer. |
| O-CU-UP | O-RAN central unit user plane or O-RAN control unit user plane (O-RAN central unit user plane or O-RAN control unit user plane) | Similar to a CU-UP in the NR system, and used to implement a function of the SDAP layer and a user plane function of the PDCP layer. |
| O-DU | O-RAN distributed unit (O-RAN distributed unit) | Based on a lower layer functional split, used to implement a radio link control (radio link control, RLC) layer, a medium access control (medium access control, MAC) layer, and a high-physical (PHY) layer (close to the MAC layer) in the 3GPP standard, where a function of the high-physical layer includes one or more of the following: forward error correction (forward error correction, FEC) encoding/decoding, scrambling/descrambling, or modulation/demodulation. |
| O-RU | O-RAN radio unit (O-RAN radio unit) | Based on the lower layer functional split, used to implement a function of a low-PHY layer (close to radio frequency) and a radio frequency function in the 3GPP standard, where the function of the low-physical layer includes one or more of the following: fast Fourier transform (fast Fourier transform, FFT)/inverse fast Fourier transform (inverse fast Fourier transform, iFFT), digital beamforming, physical random access channel (physical random access channel, PRACH) extraction and filtering, or the like. |
| | | Similar to a transmission reception point (transmission reception point, TRP) or a remote radio head (remote radio head, RRH) in 3GPP, but including the function of the low-PHY layer, for example, FFT/iFFT or PRACH extraction. |
| Non-real-time RIC | Non-real-time RAN intelligent controller (non-real-time RAN intelligent controller, "non-real-time RIC" for short) | Non-RT RIC: O-RAN non-real-time RAN Intelligent Controller: a logical function that enables non-real-time control and optimization of RAN elements and resources, AI/ML workflow including model training and updates, and policy-based guidance of applications/features in near-RT RIC. |
| | | Sometimes referred to as a non-RT RIC or an NRT RIC, configured to implement non-real-time intelligent management of a RAN function, and being capable of implementing an AI/ML workflow including model training and model updates, and policy-based guidance of applications/functions in an nRT RIC. |
| Near-real-time RIC | Near-real-time RAN intelligent controller (near-real-time RAN intelligent controller, "near-real-time RIC" for short) | Near-RT RIC: O-RAN near-real-time RAN Intelligent Controller: a logical function that enables near-real-time control and optimization of O-RAN elements and resources via fine-grained data collection and actions over E2 interface. |
| | | Sometimes referred to as a near-RT RIC or an nRT RIC, configured to implement near-real-time intelligent management of a RAN, and implementing near-real-time control and optimization of O-RAN modules and resources via data collection and related actions over an E2 interface. |
| Other interfaces NG, Xn, X2, E1, F1-C, and F1-U | | For details, refer to descriptions in 3GPP TS 38.401. |
| | | NG interface: an interface between an NR RAN device (for example, a base station, a CU, a CU-CP, or a CU-UP) and an NR core network, where NG-u is a user plane NG interface, and NG-c is a control plane NG interface. |
| | | Xn interface: an interface between NR RAN devices (such as base stations, CUs, CU-CPs, or CU-UPs), where Xn-u is a user plane Xn interface, and Xn-c is a control plane Xn interface. |
| | | X2 interface: an interface between LTE RAN devices, where X2-u is a user plane X2 interface, and X2-c is a control plane X2 interface; and the X2 interface is mainly used in an E-UTRA-NR dual connectivity (E-UTRA-NR dual connectivity, EN-DC) scenario, where a main station is an LTE RAN device, and is connected to an LTE core network over the X2 interface. E1 interface: an interface between the CU-CP and the CU-UP. F1-C interface: an interface between the CU-CP and the DU. F1-U interface: an interface between the CU-UP and the DU. |

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be referred to as "communication" for short, and the term "communication" may also be described as "data transmission", "information transmission", or "transmission".

Conventional terrestrial network (terrestrial network, TN) cannot provide seamless coverage for a UE, especially in places where base stations cannot be deployed, such as seas, deserts, and airspace. To address this, non-terrestrial network NTN has been introduced into the IoT, 5G systems, and subsequent evolved system architectures, for example, future mobile communication technologies. Non-terrestrial network NTN provides seamless coverage for UEs by deploying base stations or some functions of the base stations on high-altitude platforms, satellites, or other non-terrestrial network devices, thereby improving system reliability. In this application, a satellite is used as an example. Based on operating modes of the satellites, the satellites are generally classified into two types. A first type is transparent forwarding, and the satellite forwards a radio frequency signal of a base station located on the ground. A function of the satellite is radio frequency filtering, frequency conversion, frequency amplification, and regeneration of physical layer signals. A second type is a regenerative form. The satellite has all or some functions of the base station, that is, the base station or some functions of the base station are deployed on the satellite. Satellite systems may be classified into the following two types based on satellite altitudes, namely, satellite orbit altitudes.

A geostationary earth orbit satellite is also referred to as a geostationary satellite, the satellite travels at the same speed as the Earth's rotation system, and therefore, the satellite remains stationary with respect to the ground. Accordingly, the cells of a GEO satellite are also stationary. GEO satellite cells have relatively large coverage, typically with a cell diameter of 500 km.

Low earth orbit and medium earth orbit satellites are satellites that move fast relative to the ground. Therefore, service coverage areas provided by the medium earth orbit satellite and the low earth orbit satellite also change.

Therefore, for the low earth orbit satellite and the medium earth orbit satellite, cells that provide coverage may be classified into two types.

A quasi-earth-fixed cell (quasi-earth-fixed cell) is a cell formed by a moving satellite by adjusting a beam of the moving satellite. The formed cell is stationary on the ground for a specific time period.

An earth-moving cell (earth-moving cell) is a cell in which a beam direction is not dynamically adjusted by a satellite. Cells covered by a beam of the satellite change with the movement of the satellite.

A network energy saving (network energy saving, NES) feature is introduced into Rel-18 to reduce energy consumption and reduce operational expenses. For example, when a capacity requirement is not high, this feature allows a cell with an enhanced capacity (different from a cell providing basic coverage) to be shut down and activated as required, or allows various adaptive technologies in time domain, frequency domain, space domain, and power domain.

A cell discontinuous transmission/reception (Cell discontinuous transmission/Cell discontinuous reception, Cell DTX/DRX) technology is one of important directions of network energy saving. To reduce gNB downlink transmission/uplink reception activation time, a periodic cell DTX/DRX mode (that is, a start offset, a periodicity, and an active duration) may be configured for the UE. When cell DTX is configured and activated for the UE in a relevant serving cell, the UE may not monitor a PDCCH in a specific case, or may not monitor SPS within an inactive period of the cell DTX. When cell DRX is configured and activated for the UE in a related serving cell, the UE does not transmit or send a scheduling request (scheduling request, SR) on a configured grant (configured grant, CG) resource in a cell DRX inactive periodicity. This feature applies only to UEs in a connected mode and does not affect a random access procedure, SSB transmission, paging, and system message broadcast.

The cell DTX/DRX feature is described as follows.

An active duration is a duration in which the UE waits for receiving a PDCCH or SPS, or sending an SR or a CG. During this period of time, gNB transmission/reception of a PDCCH, SPS, an SR, a CG, and periodic and semi-persistent CSI reports remains unaffected.

"Cyclic" means that an active duration and an inactive duration are repeated periodically.

The configuration of the cell DTX/DRX mode is common (identical) to UEs configured with this feature in a cell. A cell DTX mode and a cell DRX mode may be configured and activated separately. When both cell DTX and cell DRX are configured, the active duration and periodicity parameters are common between the cell DTX and the cell DRX. The gNB configures a parameter for a cell DTX/DRX mode corresponding to a serving cell for the UE. For a UE configured with carrier aggregation (carrier aggregation, CA)/dual connectivity (dual connectivity, DC), there is only one serving cell, namely, a primary cell. For a UE configured with CA/DC, serving cells are a special cell and a secondary cell in a cell group, that is, there are a plurality of serving cells. For different serving cells, each MAC entity can be configured with a maximum of two cell DTX/DRX modes. The two cell DTX/DRX modes are aligned. Start offsets and slot offsets are common. A periodicity of one mode is an integer multiple of the other mode.

The base station configures a parameter for the cell DTX/DRX mode for the UE in the cell by using RRC signaling. After receiving the configuration, the UE may directly activate/deactivate a cell DTX/DRX configuration based on the RRC signaling, or activate/deactivate the cell DTX/DRX configuration by receiving layer-1 group common signaling sent by the base station. A DCI format (DCI 2_9) is introduced into the layer-1 group common signaling. DCI includes one or more information blocks, and indicates, to the UE in advance, positions of start bits of DCI information blocks corresponding to one or more serving cells. An activated state of cell DTX/DRX of one serving cell is indicated to the UE by using one information block of the DCI. If both cell DRX and cell DTX are configured, the information block includes 2 bits. If only cell DRX or cell DTX is configured, the information block includes 1 bit, and each bit indicates activation/deactivation by using 0/1.

Once the gNB identifies that there is an emergency call or a public safety-related service (for example, an MPS or an MCS), a network needs to ensure that the service is not affected (for example, a cell DTX/DRX configuration may be released or deactivated). The network further needs to ensure that a DRX active duration of a UE in a connected mode and a cell DTX/DRX active duration overlap at least partially, that is, a DRX periodicity of the UE in connected mode is a multiple of a cell DTX/DRX periodicity, and vice versa.

The cell discontinuous transmission (Cell DTX)/cell discontinuous reception (Cell DRX) technology is enabled for the user in the cell, so that the base station does not schedule data transmission of the user in a specific time period, and the base station is enabled to save energy in a corresponding time period. The cell discontinuous transmission technology is used as an example, so that the network performs downlink transmission with the terminal only in a specified time period, and does not perform downlink transmission in another time period. Therefore, a corresponding shutdown technology may be used, thereby implementing the network energy saving. As shown in the following figure, a cell 1 uses a periodic cell DTX configuration. The network performs downlink transmission within an active duration of cell DTX (on), including performing downlink service transmission with the terminal; and the network stops at least downlink service transmission with the terminal within an inactive duration of the cell DTX (off). A longer inactive duration of the cell DTX indicates a longer shutdown duration and a deeper-level shutdown that can be used by a network side, and a better energy saving effect. However, a service transmission delay and impact on the terminal increase accordingly. Similarly, the cell DRX means that the cell 1 uses a cell DRX configuration. The network performs uplink signal reception within an active duration of the cell DRX, including performing uplink service transmission with the terminal; and the network stops at least uplink service transmission with the terminal within an inactive duration of the cell DRX.

FIG. 2 is a diagram of a cell DTX periodicity.

A UE performs the following operations during cell DTX and cell DRX.

When the cell DTX is configured for a serving cell, and the cell DTX is activated, an activation period of the cell DTX includes running time of cellDTX-ondurationTimer of the serving cell.

When a cell DTX operation of a serving cell is deactivated, or the serving cell is in an activation period of the cell DTX:
the UE monitors a PDCCH of the serving cell.

When a cell DTX operation of a serving cell is activated, and the serving cell is not in an activation period of the cell DTX:
the UE does not monitor a PDCCH of the serving cell;
a medium access control (medium access control, MAC) layer of the UE does not instruct a physical layer to receive a downlink data channel (downlink shared channel, DL-SCH) based on configured semi-persistent scheduling resources;
the MAC layer of the UE does not indicate a configured downlink assignment (configured downlink assignment) resource and transfer HARQ information to a hybrid automatic repeat request (hybrid automatic repeat request, HARQ) entity;
the MAC layer of the UE does not set a HARQ process ID corresponding to the downlink assignment resource; and
the MAC layer of the UE does not consider that a new data bit of a HARQ process corresponding to the downlink assignment resource is flipped.

When the cell DRX is configured for a serving cell, and the cell DRX is activated, an activation period of the cell DRX includes running time of cellDRX-ondurationTimer of the serving cell.

When a cell DRX operation of a serving cell is activated, and the serving cell is not in an activation period of the cell DRX:
a physical layer is not instructed to send a scheduling request on a PUCCH resource;
an SR counter is not increased;
an SR prohibit timer is not started for an SR;
there is no transfer of a configured uplink grant (configured uplink grant) and corresponding HARQ process information to a HARQ entity;
a process associated with the configured uplink grant is not instructed to trigger new transmission or retransmission; and
periodic channel state indicators are not reported on a PUCCH, and semi-persistent channel state indicators are not reported on a PUSCH.

Currently, for a cell DTX/DRX feature, a parameter at a granularity of a serving cell for a cell DTX/DRX mode of the serving cell is configured for a UE in a connected mode, and the UE is indicated at the granularity of the serving cell to activate/deactivate a cell DTX/DRX configuration of the serving cell. However, in an NTN scenario, the geographical coverage of an NTN cell is large. For example, a beam footprint range of the LEO is at least 100 km. However, a coverage radius of a single TN site is small (for example, not exceeding 3 km), which is far less than the coverage area of the NTN cell. A geographical areas of the NTN cell is large, and UEs are not evenly distributed across different geographical areas, with diverse service requirements. Therefore, the base station side cannot enter an inactive duration, or the inactive duration is very short, making it difficult to achieve energy-saving effects of the base station.

In view of this, this application provides a communication method, to enable a network device to achieve energy savings.

As shown in FIG. 3, the method includes the following steps.

S310: A network device sends first indication information to a first terminal device. Correspondingly, the first terminal device receives the first indication information.

The first indication information indicates a first parameter. The first parameter is used for configuring a first mode, the first mode is a cell discontinuous reception mode and/or a cell discontinuous transmission mode, that is, a mode of cell discontinuous reception and/or cell discontinuous transmission. The first parameter is at an area granularity or a beam granularity, or the first parameter is at an area level (level) or a beam level. The first parameter may be a parameter used for describing an active period and an inactive period, and includes at least one of a configuration type, start offset time, slot offset time, an active duration, and a periodicity. The configuration type indicates whether single-cell DTX is configured, whether single-cell DRX is configured, or whether both cell DTX and cell DRX are configured.

For example, the first parameter is a parameter at the beam granularity, the first parameter corresponds to a first beam, the first beam belongs to at least one beam used for communication in a serving cell (serving cell), and the serving cell is a serving cell of the first terminal device. Optionally, each of the at least one beam corresponds to one parameter (or one set of parameters) for the first mode. The parameters for the first mode respectively corresponding to the at least one beam may be the same or may be different. Further, that the parameters for the first mode respectively corresponding to the at least one beam are different may be that parameters for the first mode respectively corresponding to a part of beams may be different from those corresponding to another part of beams, or parameters for the first mode respectively corresponding to beams may be different. For example, the first indication information further indicates a second parameter, and the second parameter corresponds to a second beam. The second parameter may be the same as or different from the first parameter. In addition to the first beam, the at least one beam may further include other beams, such as the second beam, a third beam, and a fourth beam. Optionally, the first beam may be one of the at least one beam, or may be a plurality of beams in the at least one beam. For example, the first parameter is common to the plurality of beams in the at least one beam. The same applies to other beams such as the second beam, the third beam, and the fourth beam.

In this application, the beam may be specifically represented by using identifiers of various signals, such as a resource index of a channel state information reference signal (channel state information reference signal, CSI-RS), an index of a synchronization signal/broadcast channel block (synchronous signal/physical broadcast channel block, SS/PBCH block or SSB), a resource index of a sounding reference signal (sounding reference signal, SRS), and a resource index of a tracking reference signal (tracking reference signal, TRS).

In addition, generally, one beam corresponds to one demodulation reference signal (demodulation reference signal, DMRS) port, one transmission configuration index (transmission configuration index, TCI), one transmit/receive point (Transmit/Receive Point, TRP), or one sounding reference signal resource indicator (SRS resource indicator, SRI) (used for uplink data transmission). Different beams may also be represented by using different DMRS ports, TCIs, TRPs, or SRIs.

For ease of description, in embodiments of this application, a DMRS port and a TCI are used as examples to describe the solutions provided in embodiments of this application. The DMRS port, the TCI, the TRP, the SRI, the resource index of the CSI-RS, the index of the SS/PBCH block, the resource index of the SRS, and the resource index of the TRS each may represent a beam. Therefore, a DMRS port and a TCI in the following descriptions may also be replaced with a beam, a TRP, an SRI, a resource index of a CSI-RS, an index of an SS/PBCH block, a resource index of an SRS, or a resource index of a TRS, and the replacement does not change the essence of the method provided in embodiments of this application.

In another example, the first parameter is a parameter at the area granularity, the first parameter corresponds to a first area, and the first area is one of a plurality of geographical areas covered by a serving cell of the first terminal device. In other words, a coverage area (service area) of the serving cell of the first terminal device may be divided into a plurality of geographical areas, that is, at least one area. The first area is one of the plurality of geographical areas. In addition to the first area, the at least one area may further include other areas, such as a second area, a third area, and a fourth area. Alternatively, the first area is different from the serving cell, the first area is an area in the geographical sense, and the first area may be covered by a plurality of cells, namely, an overlapping coverage area of the plurality of cells. The first indication information may further indicate a plurality of cells corresponding to the first area, and one or more of the plurality of cells may be serving cells of the first terminal device. In an implementation, parameters of the first mode of the plurality of cells corresponding to the first area are common in the first area, and activated states of the first mode may be the same or may be different. Alternatively, the first area is generally a part of a geographical area corresponding to the serving cell. For example, the serving cell is divided into m areas. The first area may be one of the m areas, or may be a plurality of areas in the m areas. For example, the first area is x areas in the m areas, where x is a positive integer less than or equal to m. The same applies to other areas such as the second area, the third area, and the fourth area. The parameters for the first mode respectively corresponding to the at least one area may be the same or may be different. Further, that the parameters for the first mode respectively corresponding to the at least one area are different may be that parameters for the first mode respectively corresponding to a part of areas may be different from those corresponding to another part of areas, or parameters for the first mode respectively corresponding to areas may be different. For example, the first indication information further indicates a second parameter, and the second parameter corresponds to the second area. The second parameter may be the same as or different from the first parameter.

In a possible manner, when a parameter at an area level is configured, and the at least one area is indicated to the first terminal device, the first area is used as an example, and geographical area information of the first area, for example, area coordinates, may be indicated, or a reference point and radius information of the first area may be indicated.

In a possible implementation, the third parameter indicates a parameter for the first mode corresponding to the first area in which the first terminal device is located, or a parameter for the first mode corresponding to a first serving beam of the first terminal device. The third parameter is a parameter at a serving cell granularity (or level). This implementation is applicable to a case in which the first terminal device and the network device support different 3GPP protocol releases. For example, the network device supports a parameter at a beam granularity for the first mode and/or a parameter at an area granularity for the first mode. However, the first terminal device does not support the parameter at the beam granularity for the first mode and/or the parameter at the area granularity for the first mode, but supports a parameter at a serving cell granularity for the first mode. In this case, the parameter (the third parameter) at the serving cell granularity is used to indicate the parameter at the beam granularity or the area granularity to the first terminal device, so that the first terminal device correctly obtains the parameter, and the first terminal device aligns the parameter at the beam granularity or the area granularity for the first mode with the network device.

For example, the first terminal device is a terminal device that supports an R18 (Release 18) protocol, the network device is a network device that supports an R18+ protocol, and a network side configures a parameter for a first mode at an area level or a beam level for the first terminal device by using an R18+ information element. The R18+ information element is an information element (for example, finercellDTXDRX-Config) introduced into 3GPP R19 or a later release, and the first terminal device cannot identify the information element, only a parameter (for example, cellDTXDRX-Config) of a first mode at a serving cell level introduced into R18 can be identified. However, when the network device applies cell DTX/DRX at an area level or a beam level, to cause the first terminal device to obtain the cell DTX/DRX at the area level or the beam level, the network device indicates a parameter value of the R18+ information element to the first terminal device by using an R18 information element. The parameter value of the R18+ information element may be a parameter value of a cell DTX/DRX mode of an area or a serving beam in which the first terminal device is located. Optionally, in addition to the parameter value of the mode, the parameter value may further include a value of an initial activated state. The R18 information element may further include the value of the initial activated state in addition to the parameter value of the mode.

In a possible manner, an example of the R18 information element is as follows:

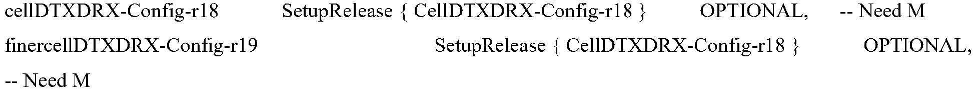

In this implementation, parameters corresponding to different beams or different areas may be indicated by using parameters at different serving cell granularities. For example, a fourth parameter is used to indicate a parameter for the first mode corresponding to a second area in which the first terminal device is located, or a parameter for the first mode corresponding to a second serving beam of the first terminal device, where the fourth parameter is a parameter at the serving cell granularity, and the fourth parameter is different from the third parameter.

In other words, parameters at different area granularities or beam granularities may be indicated by using parameters at different serving cell granularities.

For example, a parameter for the first mode corresponding to a beam a is a parameter a, and a parameter for the first mode corresponding to a beam b is a parameter b. The parameter a may be indicated by using a parameter 1, and the parameter b may be indicated by using a parameter 2. Both the parameter 1 and the parameter 2 are parameters at a serving cell granularity, or both the parameter 1 and the parameter 2 are in a form of parameters at a serving cell granularity, and values of parameters included in the parameter 1 and the parameter 2 are values of parameters at an area granularity or a beam granularity.

In a possible implementation, the first indication information further indicates an initial state of the first mode. The initial state of the first mode is an activated state (also referred to as an active state) or a deactivated state (also referred to as a non-activated state or an inactive state). In other words, when configuring the parameter for the first mode for the first terminal device, the network device may simultaneously include the initial state of the first mode. Optionally, the initial state of the first mode may alternatively be indicated by using other signaling, that is, the initial state of the first mode and the first parameter are carried in different signaling.

Optionally, the first indication information may be RRC signaling.

S320: The first terminal device obtains the parameter for the first mode based on the first indication information.

Specifically, the first terminal device uses, as the parameter for the first mode, the parameter indicated or included in the first indication information, and implements DTX and/or DRX at a beam granularity or an area granularity based on the parameter for the first mode.

Optionally, the method further includes the following step:
S330: The network device sends second indication information to the first terminal device. Correspondingly, the first terminal device receives the second indication information.

The second indication information indicates a state of the first mode of the at least one beam, or indicates a state of the first mode of the at least one area. The state of the first mode is an activated state or a deactivated state. The first terminal device activates the first mode or deactivates the first mode based on the second indication information. In other words, the second indication information dynamically and flexibly indicates the state of the first mode.

In a possible implementation, the first indication information is sent to the first terminal device by using L1 signaling. Further, the second indication information is sent to the first terminal device by using layer-1 signaling (L1 group common signaling). Layer-1 group signaling means that the L1 signaling is sent for a group of terminal devices (a terminal device set), and is applicable to the group of terminal devices. The group of terminal devices includes the first terminal device. In other words, the state of the first mode corresponding to the at least one beam or the at least one area is indicated by using group the layer-1 signaling.

Optionally, the layer-1 group common signaling may be DCI. Further, the second indication information includes at least one DCI information block. The at least one DCI information block indicates a state of the first mode of the at least one beam, or indicates a state of the first mode of the at least one area. Optionally, one DCI information block indicates a state of a first mode of one beam or one area, and the at least one DCI information block is in one-to-one correspondence with the state of the first mode of the at least one beam or the state of the first mode of the at least one area. Further, the network device may further send third indication information to the first terminal device, where the third indication information indicates a position of a start bit of a DCI information block corresponding to the first beam or the first area. Optionally, the third indication information may further indicate a position of an end bit of the DCI information block corresponding to the first beam or the first area. To be specific, the position of the start bit of the DCI information block may be used for determining the DCI information block corresponding to the first beam or the first area, to determine the state of the first mode corresponding to the first beam or the first area. For example, it may be learned, based on the first indication information, that cell DTX and DRX are applied to a beam #1, the cell DTX is applied to a beam #2, the cell DRX is applied to a beam #3, and the third indication information indicates that a position of a start bit of a DCI information block corresponding to the beam #1 is 0, a position of a start bit of a DCI information block corresponding to the beam #2 is 2, a position of a DCI information block corresponding to the beam #3 is 3, and a position of a DCI information block corresponding to a beam #4 is 4. Therefore, the first terminal device may respectively use a first bit position and a second bit position of the DCI to indicate activated states of the cell DTX and the cell DRX of the beam #1, use a third bit position of the DCI to indicate an activated state of the cell DTX of the beam #2, and use a fourth bit position of the DCI to indicate an activated state of cell DRC of the beam #3. Values 0 and 1 of the bit positions may respectively indicate the activated state and the deactivated state, or vice versa. The values and meanings of the values are not limited in this application. The first terminal device determines, based on the DCI information block, to adjust the state of the first mode from the deactivated state to the activated state, or adjust the state of the first mode from the activated state to the deactivated state.

Optionally, the group layer-1 signaling may alternatively be a medium access control control element (medium access control control element, MAC CE) or other physical layer signaling. This is not limited.

The network device may further send fourth indication information to the first terminal device. Correspondingly, the first terminal device receives the fourth indication information.

The fourth indication information indicates to release, add, or modify a parameter for the first mode corresponding to the at least one area or the at least one beam. For example, the fourth indication information indicates to modify the parameter for the first mode corresponding to the first beam, and the fourth indication information may further carry or indicate a new parameter, or the new parameter is sent to the first terminal device in other signaling. The first terminal device modifies, based on the fourth indication information or based on the fourth indication information and the new parameter, the parameter for the first mode indicated by the first indication information.

In a possible implementation, the fourth indication information may be RRC signaling, a MAC CE, or DCI.

In another possible implementation, the first terminal device may further send fifth indication information to the network device. Correspondingly, the network device receives the fifth indication information, and the fifth indication information indicates information about the first beam and/or position information of the first terminal device.

Further, the fifth indication information may indicate information about a plurality of beams, and the plurality of beams include the information about the first beam. The information about the beam may be an identifier for example, an ID, of the beam. In other words, the fifth indication information may indicate an identifier of the first beam, or may indicate an identifier of the at least one beam.

Optionally, the position information of the first terminal device indicated by the fifth indication information may be approximate position information, may be fine position information, or may be an identifier indicating a position of the first terminal device. For example, the fine position information may be global navigation satellite system coordinates (GNSS coordinates), and the approximate position information may be reduced values of the GNSS coordinates, for example, coordinate values with an error of 2 kilometers relative to the GNSS coordinates. A position identifier may be a different identifier that may be preconfigured for a geographical area, and the fifth indication information indicates an identifier of an area to which the position of the first terminal device belongs. It should be understood that the identifier is merely used as an example of the position information of the first terminal device, and this application is not limited thereto. For example, the position information of the first terminal device may alternatively be information about a geographical position of the first terminal device, coordinates of the geographical position of the first terminal device in a corresponding reference system, or position information relative to a reference object.

The foregoing method is applicable to an NTN communication scenario. According to the method, an application range and a use mode of a cell DTX/DRX mechanism, and whether the cell DTX/DRX mechanism is activated can be flexibly controlled. For example, different cell DTX modes (such as an active duration and a periodicity) and different activated/deactivated states may be configured for different geographical areas, allowing the network device to enter a shutdown state and stay in that state for a period of time. This achieves network energy saving effects.

It should be understood that, in the foregoing descriptions, the first terminal device is used as an example of the terminal device. A quantity of terminal devices is not limited in this application. For example, the network device may further indicate the parameter for the first mode to a plurality of terminal devices (such as a second terminal device, a third terminal device, and a fourth terminal device). The parameters for the first mode separately indicated by the network device to the plurality of terminal devices may be the same or may be different.

Implementations described in this specification may be independent solutions, or may be combined based on internal logic. All of these solutions fall within the protection scope of protection of this application.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

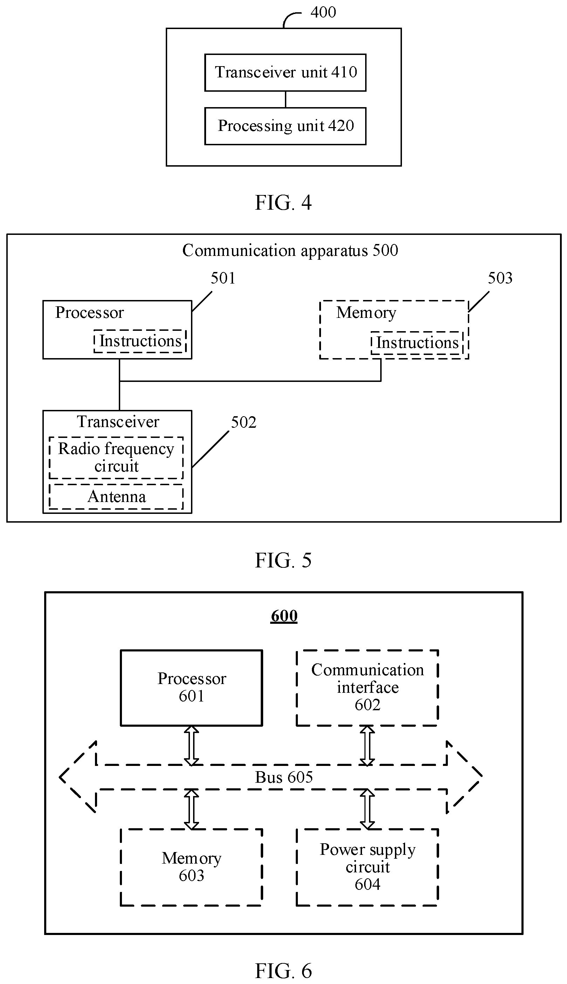

Same as the foregoing concept, as shown in FIG. 4, an embodiment of this application further provides an apparatus 400 configured to implement functions of the network device or the first terminal device in the foregoing method. For example, the apparatus may be a software module or a chip system. In this embodiment of this application, the chip system may include a chip, or may include a chip and another discrete component. The apparatus 400 may include a processing unit 420 and a communication unit 410.

In this embodiment of this application, the communication unit may also be referred to as a transceiver unit, and may include a sending unit and/or a receiving unit, which are respectively configured to perform sending and receiving steps of the sending device or the receiving device in the foregoing method embodiments.

The following describes in detail communication apparatuses in embodiments of this application with reference to FIG. 4 to FIG. 6. It should be understood that descriptions of apparatus embodiments correspond to the descriptions of the method embodiments. Therefore, for content that is not described in detail, refer to the foregoing method embodiments. For brevity, details are not described herein again.

The communication unit may also be referred to as a transceiver, a transceiver machine, a transceiver apparatus, a transceiver module, or the like. The processing unit may also be referred to as a processor, a processing board, a processing module, a processing apparatus, or the like. Optionally, a component in the communication unit 410 that is configured to implement a receiving function may be considered as a receiving unit, and a component in the communication unit 410 that is configured to implement a sending function may be considered as a sending unit. That is, the communication unit 410 includes the receiving unit and the sending unit. The communication unit sometimes may also be referred to as a transceiver machine, a transceiver, an interface circuit, or the like. The receiving unit sometimes may also be referred to as a receiver machine, a receiver, a receiving circuit, or the like. The sending unit sometimes may also be referred to as a transmitter machine, a transmitter, a transmitting circuit, or the like.

When the communication apparatus 400 performs functions of the network device in the procedure shown in FIG. 3 in the foregoing embodiment:
the communication unit is configured to receive information and send information, for example, send first indication information, send second indication information, send third indication information, send fourth indication information, and receive fifth indication information; and
the processing unit is configured to determine a first parameter and the like.

When the communication apparatus 400 performs functions of the first terminal device in the procedure shown in FIG. 3 in the foregoing embodiment:
the communication unit is configured to receive information and send information, for example, receive first indication information, receive second indication information, receive third indication information, receive fourth indication information, and send fifth indication information; and
the processing unit is configured to determine corresponding content based on indication information, for example, determine a parameter for a first mode based on the first indication information.

The foregoing is merely an example. The processing unit 420 and the communication unit 410 may further perform other functions. For more detailed descriptions, refer to related descriptions in the method embodiment shown in FIG. 3 or other method embodiments. Details are not described herein again.

In another possible product form, the sending device and the receiving device in embodiments of this application may be implemented by a general bus architecture. For ease of description, FIG. 5 is a diagram of a structure of a communication apparatus 500 according to an embodiment of this application. The communication apparatus 500 includes a processor 501 and a transceiver 502. The communication apparatus 500 may be a first terminal apparatus, or a chip or a chip system in the first terminal apparatus. Alternatively, the communication apparatus 500 may be a second terminal apparatus, or a chip or a module in the second terminal apparatus. Alternatively, the communication apparatus 500 may be a third terminal apparatus, or a chip or a module in the third terminal apparatus. Alternatively, the communication apparatus 500 may be a fourth terminal apparatus, or a chip or a module in the fourth terminal apparatus. Alternatively, the communication apparatus 500 may be a fifth terminal apparatus, or a chip or a module in the fifth terminal apparatus. Alternatively, the communication apparatus 500 may be a sixth terminal apparatus, or a chip or a module in the sixth terminal apparatus. FIG. 5 shows only main components in the communication apparatus 500. In addition to the processor 501 and the transceiver 502, the communication apparatus 500 may further include a memory 503 and an input/output apparatus (not shown in the figure).

Optionally, the processor 501 is mainly configured to process a communication protocol and communication data, control the entire communication apparatus, execute a software program, and process data of the software program. The memory 503 is mainly configured to store the software program and the data. The transceiver 502 may include a radio frequency circuit and an antenna. The radio frequency circuit is mainly configured to perform conversion between a baseband signal and a radio frequency signal, and process the radio frequency signal. The antenna is mainly configured to receive a radio frequency signal in a form of an electromagnetic wave and send a radio frequency signal in a form of an electromagnetic wave. The input/output apparatus, for example, a touchscreen, a display, or a keyboard, is mainly configured to: receive data input by a user and output data to the user.

Optionally, the processor 501, the transceiver 502, and the memory 503 may be connected through a communication bus.

After the communication apparatus is powered on, the processor 501 may read the software program in the memory 503, interpret and execute instructions of the software program, and process data of the software program. When data needs to be sent wirelessly, the processor 501 performs baseband processing on to-be-sent data, and then outputs a baseband signal to the radio frequency circuit. The radio frequency circuit performs radio frequency processing on the baseband signal, and then sends a radio frequency signal in an electromagnetic wave form via the antenna. When data is sent to the communication apparatus, the radio frequency circuit receives a radio frequency signal via the antenna, converts the radio frequency signal into a baseband signal, and outputs the baseband signal to the processor 501. The processor 501 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 50 may be in a form of the communication apparatus 500 shown in FIG. 5.

In an example, the function/implementation process of the processing module 420 in FIG. 4 may be implemented by the processor 501 in the communication apparatus 500 shown in FIG. 5 by invoking computer-executable instructions stored in the memory 503. The function/implementation process of the transceiver module 410 in FIG. 4 may be implemented by the transceiver 502 in the communication apparatus 500 shown in FIG. 5.

In still another possible product form, the first terminal apparatus, the second terminal apparatus, the third terminal apparatus, the fourth terminal apparatus, the fifth terminal apparatus, or the sixth terminal apparatus in this application may use a composition structure shown in FIG. 6, or include components shown in FIG. 6. FIG. 6 is a diagram of composition of a communication apparatus 600 according to this application.

As shown in FIG. 6, the communication apparatus 600 includes at least one processor 601. Optionally, the communication apparatus further includes a communication interface 602.

When related program instructions are executed in the at least one processor 601, the apparatus 600 may be caused to implement the method according to any one of the foregoing embodiments and any possible design thereof. Alternatively, the processor 601 is configured to implement the method according to any one of the foregoing embodiments and any possible design thereof by using a logic circuit or by executing code instructions.

The communication interface 602 may be configured to receive program instructions and transmit the program instructions to the processor. Alternatively, the communication interface 602 may be configured to perform communication interaction between the communication apparatus 600 and another communication device, for example, exchange control signaling and/or service data. For example, the communication interface 602 may be configured to receive a signal from an apparatus other than the communication apparatus 600 and transmit the signal to the processor 601, or send a signal from the processor 601 to a communication apparatus other than the communication apparatus 600.

Optionally, the communication interface 602 may be code and/or data read/write interface circuit, or the communication interface 602 may be a signal transmission interface circuit between a communication processor and a transceiver machine, or may be a pin of a chip.

Optionally, the communication apparatus 600 may further include at least one memory 603, and the memory 603 may be configured to store related program instructions and/or data required. It should be noted that the memory 603 may be independent of the processor 601, or may be integrated with the processor 601. The memory 603 may be located inside the communication apparatus 600, or may be located outside the communication apparatus 600. This is not limited.

Optionally, the communication apparatus 600 may further include a power supply circuit 604, and the power supply circuit 604 may be configured to supply power to the processor 601. The power supply circuit 604 may be located with the processor 601 in a same chip, or may be located in a chip other than a chip in which the processor 601 is located.

Optionally, the communication apparatus 600 may further include a bus 605, and parts of the communication apparatus 600 may be interconnected through the bus 605.

In some embodiments, in hardware implementation, a person skilled in the art may figure out that the communication apparatus 50 shown in FIG. 5 may be in a form of the communication apparatus 600 shown in FIG. 6.

In an example, the function/implementation process of the processing module 420 in FIG. 4 may be implemented by the processor 601 in the communication apparatus 600 shown in FIG. 6 by invoking computer-executable instructions stored in the memory 603. The function/implementation process of the transceiver module 410 in FIG. 4 may be implemented by the communication interface 602 in the communication apparatus 600 shown in FIG. 6.

It should be noted that the structure shown in FIG. 6 does not constitute a specific limitation on the sending device and the receiving device. For example, in some other embodiments of this application, the sending device and the second terminal apparatus may include more or fewer components than those shown in the figure, combine some of the components, split some of the components, or have different layouts of the components. The components shown in the figure may be implemented by hardware, software, or a combination of software and hardware.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor.

In this embodiment of this application, the processor may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk drive, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that an apparatus configured to implement a specific function in one or more procedures in the flowcharts and/or in one or more blocks in the block diagrams is generated by using instructions executed by a computer or the processor of any other programmable data processing device.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. In this way, provided that these modifications and variations made to this application fall within the scope of the claims of this application and equivalent techniques thereof, this application is also intended to cover such modifications and variations.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information to a first terminal device, wherein the first indication information indicates a first parameter, the first parameter is used for configuring a first mode, and the first mode is a cell discontinuous reception mode and/or a cell discontinuous transmission mode; and
the first parameter is a parameter at a beam granularity, the first parameter corresponds to a first beam, and the first beam belongs to at least one beam used for communication in a serving cell; or
the first parameter is a parameter at an area granularity, the first parameter corresponds to a first area, and the first area is one of a plurality of geographical areas covered by a serving cell of the first terminal device.

2. The method according to claim 1, wherein the first indication information further indicates an initial state of the first mode, and the initial state of the first mode is an activated state or a deactivated state.

3. The method according to claim 1 or 2, wherein the first indication information further indicates a second parameter, and the second parameter corresponds to a second beam, or the second parameter corresponds to a second area.

4. The method according to any one of claims 1 to 3, wherein the method further comprises:
sending second indication information to the first terminal device by using layer-1 group common signaling, wherein
the second indication information indicates a state of the first mode of the at least one beam or a state of the first mode of at least one area, the state of the first mode is an activated state or a deactivated state, the at least one beam comprises the first beam, and the at least one area comprises the first area.

5. The method according to claim 4, wherein the second indication information comprises at least one downlink control information DCI information block; and
the at least one DCI information block indicates the state of the first mode of the at least one beam or the state of the first mode of the at least one area.

6. The method according to claim 5, wherein the method further comprises:
sending third indication information to the first terminal device, wherein the third indication information indicates a position of a start bit of a DCI information block corresponding to the first beam or the first area.

7. The method according to any one of claims 1 to 6, wherein the method further comprises:
sending fourth indication information to the first terminal device, wherein the fourth indication information indicates to release, add, or modify a parameter for the first mode corresponding to the at least one area or the at least one beam.

8. The method according to any one of claims 1 to 7, wherein the method further comprises:
receiving fifth indication information, wherein the fifth indication information indicates information about the first beam and/or position information of the first terminal device.

9. The method according to any one of claims 1 to 8, wherein the method further comprises:
indicating, by using a third parameter, a parameter for the first mode corresponding to the first area in which the first terminal device is located, or a parameter for the first mode corresponding to a first serving beam of the first terminal device, wherein the third parameter is a parameter at a serving cell granularity.

10. The method according to claim 9, wherein
the first terminal device does not support a parameter at the beam granularity for the first mode and/or a parameter at the area granularity for the first mode.

11. The method according to claim 9 or 10, wherein
indicating, by using a fourth parameter, a parameter for the first mode corresponding to a second area in which the first terminal device is located, or a parameter for the first mode corresponding to a second serving beam of the first terminal device, wherein the fourth parameter is a parameter at the serving cell granularity, and the fourth parameter is different from the third parameter.

12. A communication method, comprising:
receiving first indication information, wherein the first indication information indicates a first parameter, the first parameter is used for configuring a first mode, and the first mode is a cell discontinuous reception mode and/or a cell discontinuous transmission mode; and
the first parameter is a parameter at a beam granularity, the first parameter corresponds to a first beam, and the first beam belongs to at least one beam used for communication in a serving cell; or
the first parameter is a parameter at an area granularity, the first parameter corresponds to a first area, and the first area is one of a plurality of geographical areas covered by a serving cell of a first terminal device; and
determining the first parameter based on the first indication information.

13. The method according to claim 12, wherein the first indication information further indicates an initial state of the first mode, and the initial state of the first mode is an activated state or a deactivated state.

14. The method according to claim 12 or 13, wherein the first indication information further indicates a second parameter, and the second parameter corresponds to a second beam, or the second parameter corresponds to a second area.

15. The method according to any one of claims 12 to 14, wherein the method further comprises:
receiving second indication information by using layer-1 group common signaling, wherein
the second indication information indicates a state of the first mode of the at least one beam or a state of the first mode of at least one area, the state of the first mode is an activated state or a deactivated state, the at least one beam comprises the first beam, and the at least one area comprises the first area.

16. The method according to claim 15, wherein the second indication information comprises at least one downlink control information DCI information block; and
the at least one DCI information block indicates the state of the first mode of the at least one beam or the state of the first mode of the at least one area.

17. The method according to claim 16, wherein the method further comprises:
receiving third indication information, wherein the third indication information indicates a position of a start bit of a DCI information block corresponding to the first beam or the first area; and
determining, based on the third indication information, a state of a first mode corresponding to the first beam or the first area.

18. The method according to any one of claims 12 to 17, wherein the method further comprises:
receiving fourth indication information, wherein the fourth indication information indicates to release, add, or modify a parameter for the first mode corresponding to the at least one area or the at least one beam.

19. The method according to any one of claims 12 to 18, wherein the method further comprises:
sending fifth indication information, wherein the fifth indication information indicates information about the first beam and/or position information of the first terminal device.

20. The method according to any one of claims 12 to 19, wherein the method further comprises:
determining, by using a third parameter, a parameter for the first mode corresponding to the first area in which the first terminal device is located, or a parameter for the first mode corresponding to a first serving beam of the first terminal device, wherein the third parameter is a parameter at a serving cell granularity.

21. The method according to claim 20, wherein
the first terminal device does not support a parameter at the beam granularity for the first mode and/or a parameter at the area granularity for the first mode.

22. The method according to claim 20 or 21, wherein
determining, by using a fourth parameter, a parameter for the first mode corresponding to a second area in which the first terminal device is located, or a parameter for the first mode corresponding to a second serving beam of the first terminal device, wherein the fourth parameter is a parameter at the serving cell granularity, and the fourth parameter is different from the third parameter.

23. A communication apparatus, comprising a module or a unit configured to perform the method according to any one of claims 1 to 11.

24. A communication apparatus, comprising a module or a unit configured to perform the method according to any one of claims 12 to 22.

25. A communication system, comprising the communication apparatuses according to claims 23 and 24.

26. A computer-readable storage medium, wherein the computer-readable storage medium stores a computer program or instructions, and when the computer program or instructions are run on a communication apparatus, the communication apparatus is caused to perform the method according to any one of claims 1 to 11 or the method according to any one of claims 12 to 22.

27. A computer program product, wherein the computer program product comprises a computer program or instructions used for performing the method according to any one of claims 1 to 11 or the method according to any one of claims 12 to 22.

28. A chip system, wherein the chip system comprises a processor and a communication interface, and the processor reads, over the communication interface, instructions stored in a memory, to perform the method according to any one of claims 1 to 11 or the method according to any one of claims 12 to 22.
